# EUROPÄISCHE PATENTANMELDUNG

(11) **EP 1 820 788 A1**
(43) Veröffentlichungstag der Anmeldung: **22.08.2007**
(21) Anmeldenummer: 06110039.2
(22) Anmeldetag: 16.02.2006
(51) Int. Cl.: C05G 3/08

(54) **Zubereitungen mit verbesserter Urease-hemmender Wirkung und diese enthaltende harnstoffhaltige Düngemittel**

(71) Anmelder: BASF Aktiengesellschaft, 67056 Ludwigshafen (DE)
(72) Erfinder: Wissemeier, Alexander Dr., 67346 Speyer (DE); Deck, Patrick Dr., 68165 Mannheim (DE); Huttenloch, Oliver Dr., 75228 Ispringen (DE); Mauss, Michael Dr., 67434 Neustadt (DE); Pasda, Gregor Dr., 67434 Neustadt (DE); Rahn, Ralf-Thomas Dr., 68167 Mannheim (DE); Weigelt, Wolfgang Dr., 67373 Dudenhofen (DE); Wolfram, Zerulla Dr., 67487 Maikammer (DE)

(57) **Zusammenfassung**

Die Erfindung betrifft Zubereitungen mit verbesserter Urease-hemmender Wirkung sowie harnstoffhaltige Düngemittel, welche mindestens zwei unterschiedliche (Thio)phosphorsäuretriamide enthalten. Weiterhin betrifft die Erfindung ein Verfahren zur Herstellung dieser Zubereitungen, die Verwendung dieser Zubereitungen bei der Düngung mit harnstoffhaltigen Düngemitteln sowie die Verwendung harnstoffhaltiger Düngemittel, welche mindestens zwei unterschiedliche (Thio)phosphorsäuretriamide enthalten, in der Landwirtschaft oder im Gartenbau.

## Beschreibung

Die Erfindung betrifft Zubereitungen mit verbesserter Urease-hemmender Wirkung sowie harnstoffhaltige Düngemittel, welche mindestens zwei unterschiedliche (Thio)phosphorsäuretriamide enthalten. Weiterhin betrifft die Erfindung ein Verfahren zur Herstellung dieser Zubereitungen, die Verwendung dieser Zubereitungen bei der Düngung mit harnstoffhaltigen Düngemitteln sowie die Verwendung harnstoffhaltiger Düngemittel, welche mindestens zwei unterschiedliche (Thio)phosphorsäuretriamide enthalten, in der Landwirtschaft oder im Gartenbau.

Weltweit wird die überwiegende und weiter steigende Menge des für die Düngung verwendeten Stickstoffs in Form von Harnstoff bzw. harnstoffhaltigen Düngemitteln eingesetzt. Harnstoff selbst ist jedoch eine nicht oder kaum aufgenommene Stickstoffform, da er relativ rasch durch das im Boden ubiquitär vorhandene Enzym Urease zu Ammoniak und Kohlendioxid hydrolysiert wird (Mobley, H.L.T., Island, M.D., Hausinger, R.P. (1995) Molecular biology of microbial ureases, Microbiol. Rev. 59, 452-480). Dabei wird unter Umständen gasförmiges Ammoniak an die Atmosphäre abgegeben, welches dann nicht mehr im Boden für die Pflanzen zur Verfügung steht, wodurch die Effizienz der Düngung reduziert wird.

Es ist bekannt, dass man die Stickstoffausnutzung beim Einsatz harnstoffhaltiger Düngemittel verbessern kann, indem man harnstoffhaltige Düngemittel zusammen mit Substanzen ausbringt, welche die enzymatische Harnstoffspaltung verringern oder inhibieren können (Kiss, S., Simihäian, M. (2002) Improving Efficiency of Urea Fertilizers by Inhibition of Soil Urease Activity, ISBN 1-4020-0493-1, Kluwer Academic Publishers, Dordrecht, The Netherlands). Zu den potentesten bekannten Ureaseinhibitoren gehören N-Alkylthiophosphorsäuretriamide und N-Alkylphosphorsäuretriamide, welche beispielsweise in EP 0 119 487 beschrieben sind. Eine großflächige Anwendung dieser Ureaseinhibitoren wurde bislang durch ihre relativ hohen Herstellkosten beeinträchtigt bzw. dadurch, dass die benötigten Aufwandmengen zu hoch waren.

Eine Aufgabe der Erfindung bestand darin, die Stickstoffausnutzung beim Einsatz von Ureaseinhibitoren bei der Düngung mit Harnstoff oder harnstoffhaltigen Düngemitteln zu verbessern. Eine weitere Aufgabe bestand darin, die benötigten Aufwandmengen an Ureaseinhibitoren zu reduzieren.

Überraschenderweise wurde nun gefunden, dass sich bei Verwendung von Zubereitungen, welche mindestens zwei unterschiedliche (Thio)phosphorsäuretriamide enthalten, die gasförmigen Ammoniakverluste nach Ausbringung von Harnstoff oder harnstoffhaltigen Düngemitteln stärker einschränken lassen als bei Applikation der gleichen Menge eines einzelnen (Thio)phosphorsäuretriamids. Ein Gegenstand dieser Erfindung sind daher Zubereitungen mit verbesserter Urease-hemmender Wirkung, welche mindestens zwei unterschiedliche (Thio)phosphorsäuretriamide enthalten.

Die Strukturen der (Thio)phosphorsäuretriamide in den erfindungsgemäßen Zubereitungen entsprechen dabei der Formel (I)

R₁R₂N-P(X)(NH₂)₂ (I),

in der
X Sauerstoff oder Schwefel,
R₁ und R₂ unabhängig voneinander Wasserstoff, C₁-C₁₀-Alkyl-, C₃-C₁₀-Cycloalkyl-, C₆-C₁₀-Aryl- oder Dialkylaminocarbonylgruppen darstellen, wobei R₁ und R₂ zusammen mit dem sie verbindenden Stickstoffatom auch einen 5- oder 6-gliedrigen gesättigten oder ungesättigten heterocyclischen Rest bilden können, der gegebenenfalls noch 1 oder 2 weitere Heteroatome, ausgewählt aus der Gruppe bestehend aus Stickstoff, Sauerstoff und Schwefel, enthalten kann.

Beispiele für Alkylgruppen sind Methyl, Ethyl, Propyl, Isopropyl, Butyl, Isobutyl, sec-Butyl, tert-Butyl, Pentyl, Isopentyl, Neopentyl, tert-Pentyl, Hexyl, 2-Methylpentyl, Heptyl, Octyl, 2-Ethylhexyl, Isooctyl, Nonyl, Isononyl, Decyl und Isodecyl. Cycloalkylgruppen sind z. B. Cyclopropyl, Cyclobutyl, Cyclopentyl, Cyclohexyl und Cyclooctyl, Arylgruppen sind z. B. Phenyl oder Naphthyl. Beispiele für heterocyclische Reste R₁R₂N-sind Piperazinyl-, Morpholinyl-, Pyrrolyl-, Pyrazolyl-, Triazolyl-, Oxazolyl-, Thiazolyl- oder Imidazolylgruppen.

Solche Verbindungen sind beispielsweise aus EP 0 119 487, WO 00/58317 und EP 1 183 220 als Ureaseinhibitoren bekannt.

Besonders bevorzugt sind N-Alkylthiophosphorsäuretriamide (mit X = S und R₂ = H) und N-Alkylphosphorsäuretriamide (mit X = O und R₂ = H).

Die Herstellung solcher Ureaseinhibitoren kann z. B. nach bekannten Methoden aus Thiophosphorylchlorid, primären oder sekundären Aminen und Ammoniak erfolgen, wie sie beispielsweise in US 5,770,771 beschrieben sind. Hierbei bringt man in einem ersten Schritt Thiophosphorylchlorid mit einem Äquivalent eines primären oder sekundären Amins in Gegenwart einer Base zur Reaktion und setzt das Produkt anschließend mit einem Überschuss Ammoniak zum Endprodukt um.

Die erfindungsgemäßen Zubereitungen enthalten mindestens zwei verschiedene Derivate der allgemeinen Formel (I), welche sich in mindestens einem der Reste R₁ oder R₂ unterscheiden müssen. Beispielsweise enthält eine erfindungsgemäße Zubereitung die Wirkstoffe N-n-Butylthiophosphorsäuretriamid (NBTPT) und N-n-Propylthiophosphorsäuretriamid (NPTPT). Jeder einzelne Wirkstoff ist dabei mit mindestens 0.01 Gew.-% und höchstens 99.99 Gew.-% bezogen auf die Gesamtwirkstoffmenge in der Zubereitung enthalten. Bevorzugt sind die einzelnen Wirkstoffe in Mengen von 20 bis 40 Gew.-% bzw. 60 bis 80 Gew.-% enthalten.

Bevorzugt sind Zubereitungen, welche N-n-Butylthiophosphorsäuretriamid (NBTPT) als einen der Wirkstoffe enthalten. Bei dem mindestens einen weiteren Wirkstoff handelt es sich vorzugsweise um ein Derivat, ausgewählt aus der Gruppe, bestehend aus N-Cyclohexyl-, N-Pentyl-, N-iso-Butyl- und N-Propylphophorsäuretriamid und -thiophosphorsäuretriamid. Besonders bevorzugt sind solche Zubereitungen, welche NBTPT in Mengen 40 bis 95 Gew.-%, ganz besonders bevorzugt von 60 bis 80 Gew.-% enthalten, jeweils bezogen auf die gesamte Wirkstoffmenge.

Thiophosphorsäuretriamide werden bekanntermaßen relativ leicht zu den entsprechenden Phosphorsäuretriamiden hydrolysiert. Da Feuchtigkeit in der Regel nicht vollständig ausgeschlossen werden kann, liegen Thiophosphorsäuretriamid und das korrespondierende Phosphorsäuretriamid häufig im Gemisch miteinander vor. Der Begriff "(Thio)phopsphorsäuretriamid" bezeichnet daher in dieser Schrift sowohl die reinen Thiophosphorsäuretriamide bzw. Phosphorsäuretriamide als auch deren Gemische.

Die erfindungsgemäßen Zubereitungen können entweder aus den reinen Wirkstoffgemischen bestehen oder auch in Form von flüssigen oder festen Formulierungen vorliegen. Flüssige Formulierungen können außer dem Wirkstoffgemisch noch Lösungsmittel wie Wasser, Alkohole, Glykole oder Amine sowie deren Gemische in Mengen von etwa 1 bis etwa 80 Gew.-% enthalten. Beispiele für geeignete flüssige Formulierungen von (Thio)phosphorsäuretriamiden finden sich in WO 97/22568, auf die voll umfänglich Bezug genommen wird. Feste Formulierungen können außer dem Wirkstoffgemisch noch Zusatzstoffe wie Füllstoffe, Bindemittel oder Granulierhilfsmittel, beispielsweise Kalk, Gips, Siliziumdioxid oder Kaolinit, in Mengen von etwa 1 bis etwa 95 Gew.-% enthalten. Erfindungsgemäße Zubereitungen können neben dem Wirkstoffgemisch auch gleichzeitig Lösungsmittel oder - gemische und Zusatzstoffe umfassen sowie als Suspension vorliegen.

Die Herstellung der erfindungsgemäßen Zubereitungen, welche mindestens zwei verschiedene (Thio)phosphorsäuretriamide enthalten, kann beispielsweise durch Vermischen von zwei oder mehr separat synthetisierten Einzelwirkstoffen erfolgen. Eine andere Möglichkeit besteht darin, im ersten Schritt der oben beschriebenen Synthese ein Gemisch aus mindestens zwei primären und/oder sekundären Aminen einzusetzen, so dass als Produkt direkt ein Gemisch aus mindestens zwei (Thio)phosphorsäuretriamiden erhalten wird. Weiterer Gegenstand der Erfindung ist somit ein Verfahren zur Herstellung von Zubereitungen mit verbesserter Urease-hemmender Wirkung entweder durch Vermischen von mindestens zwei separat synthetisierten (Thio)phosphorsäuretriamiden oder durch Umsetzung von Thiophosphorylchlorid mit einem Gemisch von mindestens zwei verschiedenen primären und/oder sekundären Aminen und anschließend mit Ammoniak, wodurch direkt ein Produkt mit erfindungsgemäßer Zusammensetzung erhalten wird. So kann durch Umsetzung eines Gemisches von beispielsweise zwei primären Aminen wie n-Butylamin und n-Propylamin mit Thiophosphorylchlorid und anschließender Reaktion mit Ammoniak direkt ein Gemisch von NBTPT und NPTPT erhalten werden. Das resultierende Mengenverhältnis der beiden Produkte entspricht dabei in der Regel jenem der eingesetzten Amine, sofern die Reaktionsgeschwindigkeiten der beiden Amine vergleichbar sind.

Ein weiterer Gegenstand der Erfindung sind harnstoffhaltige Düngemittel, welche mindestens zwei unterschiedliche (Thio)phosphorsäuretriamide enthalten.

Unter einem harnstoffhaltigen Düngemittel ist zunächst einmal Harnstoff selber zu verstehen. Dieser hat in marktüblicher Düngemittelqualität eine Reinheit von mindestens 90 % und kann beispielsweise kristallin, granuliert, kompaktiert, geprillt oder gemahlen vorliegen. Daneben sollen auch Mischungen von Harnstoff mit einem oder mehreren weiteren Stickstoffdüngemitteln wie Ammoniumsulfat, Ammoniumnitrat, Ammoniumchlorid, Cyanamid, Dicyandiamid oder Calciumnitrat sowie Langzeitdüngemitteln, beispielsweise Harnstoff-Formaldehyd-, Harnstoff-Acetaldehyd- oder Harnstoff-Glyoxal-Kondensate umfasst sein. Weiterhin sind auch harnstoffhaltige Mehrnährstoffdünger umfasst, welche neben Stickstoff noch mindestens einen weitere Nährstoff wie Phosphor, Kalium, Magnesium, Calcium oder Schwefel enthalten. Daneben können auch die Spurenelemente Bor, Eisen, Kupfer, Zink, Mangan oder Molybdän enthalten sein. Derartige harnstoffhaltige Mehrnährstoffdünger können ebenfalls granuliert, kompaktiert, geprillt, gemahlen oder als Kristallmischung vorliegen. Außerdem sind auch flüssige harnstoffhaltige Düngemittel umfasst, wie Ammoniumnitrat-Harnstoff-Lösung oder auch Gülle. Die harnstoffhaltigen Düngemittel können außerdem noch einen oder mehrere weitere Wirkstoffe wie beispielsweise Nitrifikationsinhibitoren, Herbizide, Fungizide, Insektizide, Wachstumsregulatoren, Hormone, Pheromone oder andere Pflanzenschutzmittel oder Bodenhilfsstoffe in Mengen von 0.01 bis 20 Gew.-% enthalten.

Die erfindungsgemäßen Düngemittel sind dadurch erhältlich, dass man entweder mindestens zwei unterschiedliche (Thio)phosphorsäuretriamide separat oder die mindestens zwei unterschiedliche (Thio)phosphorsäuretriamide enthaltenden Zubereitungen entweder in flüssiger oder auch in fester Form mit den harnstoffhaltigen Düngemitteln vermischt oder in diese eingranuliert, einkompaktiert oder einprillt, indem sie einem entsprechenden Düngemittelgemisch bzw. einer Maische oder Schmelze zugegeben werden. Daneben können die mindestens zwei unterschiedlichen (Thio)phosphorsäuretriamide oder die mindestens zwei unterschiedliche (Thio)phosphorsäuretriamide enthaltenden Zubereitungen aber auch oberflächig auf bereits fertige Granulate, Kompaktate oder Prills der harnstoffhaltigen Düngemittel aufgebracht werden, beispielsweise durch Aufsprühen, Aufpudern oder Imprägnieren. Dies kann auch unter Einsatz von weiteren Hilfsstoffen wie Haftungsvermittlern oder Umhüllungsmaterialien erfolgen. Geeignete Apparate zur Durchführung dieser Aufbringung sind beispielsweise Teller, Trommeln, Mischer oder Wirbelbettapparate, die Aufbringung kann aber auch auf Förderbändern bzw. deren Abwurfstellen oder mittels pneumatischer Feststoffförderer erfolgen.

Die in den erfindungsgemäßen Düngemitteln enthaltene Gesamtmenge an (Thio)phosphorsäuretriamiden liegt in der Regel zwischen 0.001 und 0.5 Gew.%, bevorzugt im Bereich zwischen 0.01 und 0.3 Gew.-%, besonders bevorzugt zwischen 0.02 und 0.2 Gew.%, jeweils bezogen auf den enthaltenen Harnstoff.

Ein weiterer Gegenstand der Erfindung ist die Verwendung dieser Zubereitungen, welche mindestens zwei unterschiedliche (Thio)phosphorsäuretriamide enthalten, bei der Düngung mit harnstoffhaltigen Düngemitteln. Diese Verwendung kann sowohl durch Gebrauch der oben beschriebenen harnstoffhaltigen Düngemittel, welche mindestens zwei unterschiedliche (Thio)phosphorsäuretriamide enthalten, erfolgen als auch durch separate Applikation der erfindungsgemäßen Zubereitungen auf einer landwirtschaftlich oder gärtnerisch genutzten Fläche vor oder nach der Anwendung entsprechender harnstoffhaltiger Düngemittel. Außerdem können die erfindungsgemäßen Zubereitungen auch als Zusatz zu Gülle oder zur Behandlung von beispielsweise Tierställen oder Gehegen etwa zur Geruchsreduzierung verwendet werden.

Ein weiterer Gegenstand der Erfindung ist die Verwendung harnstoffhaltiger Düngemittel, welche mindestens zwei unterschiedliche (Thio)phosphorsäuretriamide enthalten, in der Landwirtschaft oder im Gartenbau.

Die folgenden Beispiele sollen die Erfindung weiter erläutern.

### Beispiele

Die Effektivität der (Thio)phosphorsäuretriamide einzeln und in Kombination wurden in Anlehnung an die Methode von Fenn & Kissel ((1973) Ammonia volatilization from surface applications of ammonium compounds on calcareous soils. Soil Sci. Soc. Am. J. 37, 855-859) auf ihren Einfluss, volatile Ammoniakverluste aus Harnstoff oder harnstoffhaltigen Düngemitteln einzuschränken, geprüft. Es wurden drei verschieden Böden verwendet, bei denen volatile Ammoniakverluste nach Düngung mit Harnstoff besonders ausgeprägt sind. Diese Böden zeichnen sich durch relativ hohe pH-Werte > 6,5 und/oder eine geringe Basenpufferung aus. Durch eine geringe Basenpufferung wird durch das entstehende Ammoniak im Gleichgewicht mit einer Ammoniumhydroxid-Bildung um die Harnstoffgranalie herum der pH-Wert der Bodenlösung angehoben, was seinerseits das Gleichgewicht zwischen NH₃ + H₂O ↔ NH₄⁺ + OH- zu Gunsten des gasförmigen Ammoniak verschiebt. Pro Inkubationsgefäß wurden 200 g trockener Boden mit 5,4 ml vollentsalztem Wasser befeuchtet und 1,087 g Harnstoff (entspricht 500 mg Harnstoff-N) als Granalien appliziert. Wurden harnstoffhaltige Lösungen geprüft, erfolgte die Anfeuchtung der 200 g Boden mit einer wässrigen harnstoffhaltigen Lösung, enthaltend 1.630 g Harnstoff (entspricht 750 mg Harnstoff-N), ohne oder mit Ureaseinhibitor bzw. Kombinationen von diesen. Die Lösung wurde mit einer Pipette tropfenweise auf der Bodenoberfläche verteilt appliziert. Die Menge an (Thio)phosphorsäuretriamiden als Einzelstoff oder in Kombination in unterschiedlichen Anteilen betrug immer einheitlich 0,125 % (w/w) bezogen auf Harnstoff. Die Inkubationen fanden bei 20°C (18-22°C) in einer Klimakammer statt. Das in der Säurefalle aufgefangene Ammoniak wurde als Ammonium mittels eines Continuous Flow Analyzer (Firma Bran + Luebbe) nach dem Fachmann bekannten Methoden quantifiziert.

### Bodencharakteristika:

| Boden | pH (CaCl₂) | Korngrößenverteilung | | | org. Substanz % Kohlenstoff |
|---|---|---|---|---|---|
| | | % Sand | % Schluff | % Ton | |
| Limburgerhof | 6,8 | 73 | 16 | 11 | <1 |
| Hannover | 7,5 | 32 | 47 | 20 | 1 |
| Frankreich | 7,6 | 31 | 23 | 36 | 10 |

### Ergebnisse:

In Tabelle 1 bis 4 sind die NH₃-Verluste nach 10-tägiger Inkubation von granuliertem Harnstoff ohne und mit Zusatz an (Thio)phosphorsäuretriamiden einzeln und in Kombination jeweils mit NBTPT dargestellt. Man erkennt, dass die Wirkung von NBTPT deutlich verbessert wird wenn 20 bis 40 Gewichtsanteile an NBTPT durch NcHTPT, NPenTPT, NiBTPT oder NPTPT ersetzt werden.

Die Tabellen 4, 9 und 10 zeigen die Ergebnisse für die analogen Untersuchungen mit der Wirkstoffkombination NBTPT und NPTPT auf drei verschiedenen Böden. Die verbesserte Wirkung der erfindungsgemäßen Kombination zeigt sich auf allen drei Böden.

Die Tabellen 5 bis 8 geben die Ergebnisse der analogen Untersuchungen mit Harnstofflösung wieder. Man erkennt, dass das Niveau der Ammoniakverluste ohne Ureaseinhibitor geringer ist als bei granuliertem Harnstoff und je nach Versuchsserie knapp 11 bis 28 % der als Harnstoff gedüngten Stickstoffmenge entspricht, während sie bei granuliertem Harnstoff etwa 39 % betrugen. Das lässt sich damit erklären, dass die Harnstofflösung in den Boden eingedrungen ist und dort die negativ geladenen Bodenbestandteile vermehrt Ammoniumionen dem Gleichgewicht NH₃ ↔ NH₄⁺ entzogen haben. Ein weiterer Faktor, der die Größe der Ammoniakverluste bestimmt, ist die Luftbewegung. Auch die ist im Boden geringer als an der Bodenoberfläche.

Das Wirkungsmuster der (Thio)phosphorsäuretriamiden untereinander und die besondere Effektivität, Ammoniakverluste auch aus einer Lösung einzuschränken, wenn zwischen 20 und 40 Gew.-% der NBTPT-Menge durch NPenTPT, NiBTPT oder NPTPT ersetzt werden, war auch hier zu erkennen.

Die Tabelle 11 und 12 zeigen die Ergebnisse von Vergleichsversuchen mit den nicht erfindungsgemäßen Wirkstoffkombinationen aus NBTPT und N,N-Di-n-butyl-thiophosphorsäuretriamid (Tabelle 11) bzw. NBTPT und N,N-Di-isobutyl-thiophosphorsäuretriamid (Tabelle 12). Bei diesen Mischungen tritt keine Wirkungsverbesserung auf.

**Tab. 1:**

| Volatile Stickstoffverluste nach 10 Tagen Inkubation von granuliertem Harnstoff ohne und mit Zusatz der Ureaseinhibitoren NBTPT und N-Cyclohexylthiophosphorsäuretriamid (NcHTPT)und deren Kombination bei Boden Limburgerhof | | | | |
|---|---|---|---|---|
| Relative Gewichtsanteile NBTPT | Relative Gewichtsanteile NcHTPT | % N Verlust, bezogen auf gedüngte N-Menge | % N Verlust relativ zu NBTPT ohne Mischungspartner | % N Verlust relativ zu NcHTPT ohne Mischungspartner |
| 0 | 0 | 39,40 | - | - |
| 100 | 0 | 1,54 | 100 | 56 |
| 80 | 20 | 1,01 | 66 | 36 |
| 70 | 30 | 1,04 | 67 | 38 |
| 60 | 40 | 1,06 | 69 | 38 |
| 0 | 100 | 2,77 | 180 | 100 |

**Tab. 2:**

| Volatile Stickstoffverluste nach 10 Tagen Inkubation von granuliertem Harnstoff ohne und mit Zusatz der Ureaseinhibitoren NBTPT und N-Pentylthiophosphorsäuretriamid (NPenTPT) und deren Kombination bei Boden Limburgerhof | | | | |
|---|---|---|---|---|
| Relative Gewichtsanteile NBTPT | Relative Gewichtsanteile NPenTPT | % N Verlust, bezogen auf gedüngte N-Menge | % N Verlust relativ zu NBTPT ohne Mischungspartner | % N Verlust relativ zu NPenTPT ohne Mischungspartner |
| 0 | 0 | 39,40 | - | - |
| 100 | 0 | 1,54 | 100 | 63 |
| 80 | 20 | 1,04 | 68 | 42 |
| 70 | 30 | 0,80 | 52 | 33 |
| 60 | 40 | 1,04 | 68 | 42 |
| 0 | 100 | 2,46 | 130 | 100 |

**Tab. 3:**

| Volatile Stickstoffverluste nach 10 Tagen Inkubation von granuliertem Harnstoff ohne und mit Zusatz der Ureaseinhibitoren NBTPT und N-iso-Butylthiophosphorsäuretriamid (NiBTPT)und deren Kombination bei Boden Limburgerhof | | | | |
|---|---|---|---|---|
| Relative Gewichtsanteile NBTPT | Relative Gewichtsanteile NiBTPT | % N Verlust, bezogen auf gedüngte N-Menge | % N Verlust relativ zu NBTPT ohne Mischungspartner | % N Verlust relativ zu NiBTPT ohne Mischungspartner |
| 0 | 0 | 39,40 | - | - |
| 100 | 0 | 1,54 | 100 | 92 |
| 80 | 20 | 1,28 | 83 | 76 |
| 70 | 30 | 1,08 | 70 | 64 |
| 60 | 40 | 1,50 | 97 | 89 |
| 0 | 100 | 1,68 | 109 | 100 |

**Tab. 4:**

| Volatile Stickstoffverluste nach 10 Tagen Inkubation von granuliertem Harnstoff ohne und mit Zusatz der Ureaseinhibitoren NBTPT und N-Propylthiophosphorsäuretriamid (NPTPT) und deren Kombination bei Boden Limburgerhof | | | | |
|---|---|---|---|---|
| Relative Gewichtsanteile NBTPT | Relative Gewichtsanteile NPTPT | % N Verlust, bezogen auf gedüngte N-Menge | % N Verlust relativ zu NBTPT ohne Mischungspartner | % N Verlust relativ zu NPTPT ohne Mischungspartner |
| 0 | 0 | 39,40 | - | - |
| 100 | 0 | 1,54 | 100 | 96 |
| 80 | 20 | 0,97 | 63 | 61 |
| 70 | 30 | 0,96 | 62 | 60 |
| 60 | 40 | 0,95 | 62 | 59 |
| 0 | 100 | 1,60 | 104 | 100 |

**Tab. 5:**

| Volatile Stickstoffverluste nach 10 Tagen Inkubation von 30 %iger Harnstoff-Lösung ohne und mit Zusatz der Ureaseinhibitoren NBTPT und NcHTPT und deren Kombination bei Boden Limburgerhof | | | | |
|---|---|---|---|---|
| Relative Gewichtsanteile NBTPT | Relative Gewichtsanteile NcHTPT | % N Verlust, bezogen auf gedüngte N-Menge | % N Verlust relativ zu NBTPT ohne Mischungspartner | % N Verlust relativ zu NcHTPT ohne Mischungspartner |
| 0 | 0 | 28,2 | - | - |
| 100 | 0 | 0,69 | 100 | 62 |
| 80 | 20 | 0,60 | 87 | 54 |
| 70 | 30 | 0,59 | 85 | 53 |
| 60 | 40 | 0,60 | 87 | 54 |
| 0 | 100 | 1,11 | 160 | 100 |

**Tab. 6:**

| Volatile Stickstoffverluste nach 10 Tagen Inkubation von 30 %iger Harnstoff-Lösung ohne und mit Zusatz der Ureaseinhibitoren NBTPT und NPenTPT und deren Kombination bei Boden Limburgerhof | | | | |
|---|---|---|---|---|
| Relative Gewichtsanteile NBTPT | Relative Gewichtsanteile NPenTPT | % N Verlust, bezogen auf gedüngte N-Menge | % N Verlust relativ zu NBTPT ohne Mischungspartner | % N Verlust relativ zu NPenTPT ohne Mischungspartner |
| 0 | 0 | 28,12 | - | - |
| 100 | 0 | 0,71 | 100 | 63 |
| 80 | 20 | 0,55 | 77 | 49 |
| 70 | 30 | 0,61 | 86 | 54 |
| 60 | 40 | 0,58 | 82 | 52 |
| 0 | 100 | 1,12 | 158 | 100 |

**Tab. 7:**

| Volatile Stickstoffverluste nach 10 Tagen Inkubation von 30 %iger Harnstoff-Lösung ohne und mit Zusatz der Ureaseinhibitoren NBTPT und NiBTPT und deren Kombination bei Boden Limburgerhof | | | | |
|---|---|---|---|---|
| Relative Gewichtsanteile NBTPT | Relative Gewichtsanteile NiBTPT | % N Verlust, bezogen auf gedüngte N-Menge | % N Verlust relativ zu NBTPT ohne Mischungspartner | % N Verlust relativ zu NiBTPT ohne Mischungspartner |
| 0 | 0 | 10,65 | - | - |
| 100 | 0 | 0,33 | 100 | 61 |
| 80 | 20 | 0,25 | 76 | 46 |
| 70 | 30 | 0,25 | 76 | 46 |
| 60 | 40 | 0,29 | 88 | 54 |
| 0 | 100 | 0,54 | 164 | 100 |

**Tab. 8:**

| Volatile Stickstoffverluste nach 10 Tagen Inkubation von 30 %iger Harnstoff-Lösung ohne und mit Zusatz der Ureaseinhibitoren NBTPT und NPTPT und deren Kombination bei Boden Limburgerhof | | | | |
|---|---|---|---|---|
| Relative Gewichtsanteile NBTPT | Relative Gewichtsanteile NPTPT | % N Verlust, bezogen auf gedüngte N-Menge | % N Verlust relativ zu NBTPT ohne Mischungspartner | % N Verlust relativ zu NPTPT ohne Mischungspartner |
| 0 | 0 | 10,65 | - | - |
| 100 | 0 | 0,33 | 100 | 79 |
| 80 | 20 | 0,24 | 73 | 57 |
| 70 | 30 | 0,23 | 70 | 55 |
| 60 | 40 | 0,30 | 91 | 71 |
| 0 | 100 | 0,42 | 127 | 100 |

**Tab. 9:**

| Volatile Stickstoffverluste nach 10 Tagen Inkubation von granuliertem Harnstoff ohne und mit Zusatz der Ureaseinhibitoren NBTPT und NPTPT und deren Kombination bei Boden Hannover | | | | |
|---|---|---|---|---|
| Relative Gewichtsanteile NBTPT | Relative Gewichtsanteile NPTPT | % N Verlust, bezogen auf gedüngte N-Menge | % N Verlust relativ zu NBTPT ohne Mischungspartner | % N Verlust relativ zu NPTPT ohne Mischungspartner |
| 0 | 0 | 46,44 | - | - |
| 100 | 0 | 1,32 | 100 | 63 |
| 80 | 20 | 0,89 | 67 | 43 |
| 70 | 30 | 0,83 | 63 | 40 |
| 60 | 40 | 1,05 | 80 | 50 |
| 0 | 100 | 2,08 | 158 | 100 |

**Tab. 10:**

| Volatile Stickstoffverluste nach 10 Tagen Inkubation von granuliertem Harnstoff ohne und mit Zusatz der Ureaseinhibitoren NBTPT und NPTPT und deren Kombination bei Boden Frankreich | | | | |
|---|---|---|---|---|
| Relative Gewichtsanteile NBTPT | Relative Gewichtsanteile NPTPT | % N Verlust, bezogen auf gedüngte N-Menge | % N Verlust relativ zu NBTPT ohne Mischungspartner | % N Verlust relativ zu NPTPT ohne Mischungspartner |
| 0 | 0 | 48,43 | - | - |
| 100 | 0 | 1,30 | 100 | 83 |
| 80 | 20 | 0,73 | 56 | 46 |
| 70 | 30 | 1,01 | 78 | 64 |
| 60 | 40 | 1,18 | 91 | 75 |
| 0 | 100 | 1,57 | 121 | 100 |

**Tab. 11:**

| Volatile Stickstoffverluste nach 10 Tagen Inkubation von 30 %iger Harnstoff-Lösung ohne und mit Zusatz der Ureaseinhibitoren NBTPT und N,N-Di-n-butyl-thiophosphorsäuretriamid (NNDBTPT) und deren Kombination bei Boden Limburgerhof | | | | |
|---|---|---|---|---|
| Relative Gewichtsanteile NBTPT | Relative Gewichtsanteile NNDBTPT | % N Verlust, bezogen auf gedüngte N-Menge | % N Verlust relativ zu NBTPT ohne Mischungspartner | % N Verlust relativ zu NNDBTPT ohne Mischungspartner |
| 0 | 0 | 23,10 | - | - |
| 100 | 0 | 1,90 | 100 | 10 |
| 80 | 20 | 2,07 | 109 | 11 |
| 70 | 30 | 2,55 | 134 | 13 |
| 60 | 40 | 2,65 | 139 | 14 |
| 0 | 100 | 19,24 | 1013 | 100 |

**Tab. 12:**

| Volatile Stickstoffverluste nach 10 Tagen Inkubation von 30 %iger Harnstoff-Lösung ohne und mit Zusatz der Urease-Inhibitoren NBTPT und N,N-Di-isobutyl-thiophosphorsäuretriamid (NNDiBTPT) und deren Kombination bei Boden Limburgerhof | | | | |
|---|---|---|---|---|
| Relative Gewichtsanteile NBTPT | Relative Gewichtsanteile NNDiBTPT | % N Verlust, bezogen auf gedüngte N-Menge | % N Verlust relativ zu NBTPT ohne Mischungspartner | % N Verlust relativ zu NNDiBTPT ohne Mischungspartner |
| 0 | 0 | 23,10 | - | - |
| 100 | 0 | 1,90 | 100 | 9 |
| 80 | 20 | 1,95 | 103 | 9 |
| 70 | 30 | 2,33 | 123 | 11 |
| 60 | 40 | 2,62 | 138 | 12 |
| 0 | 100 | 21,83 | 1149 | 100 |

## Patentansprüche

1. Zubereitung, enthaltend mindestens zwei unterschiedliche (Thio)phosphorsäuretriamide mit der Struktur (I),
R₁R₂N-P(X)(NH₂)₂ (I),
in der
X Sauerstoff oder Schwefel,
R₁ und R₂ unabhängig voneinander Wasserstoff, C₁-C₁₀-Alkyl-, C₃-C₁₀-Cycloalkyl-, C₆-C₁₀-Aryl- oder Dialkylaminocarbonylgruppen darstellen, wobei R₁ und R₂ zusammen mit dem sie verbindenden Stickstoffatom auch einen 5- oder 6-gliedrigen gesättigten oder ungesättigten heterocyclischen Rest bilden können, der gegebenenfalls noch 1 oder 2 weitere Heteroatome, ausgewählt aus der Gruppe bestehend aus Stickstoff, Sauerstoff und Schwefel, enthalten kann, welche sich mindestens in einem der Reste R₁ oder R₂ unterscheiden.

2. Zubereitung nach Anspruch 1, **dadurch gekennzeichnet, dass** es sich bei einem der (Thio)phophorsäuretriamide um ein N-Alkyl(thio)phosphorsäuretriamid und/oder N-Alkylphosphorsäuretriamid handelt.

3. Zubereitung nach einem der Ansprüche 1 oder 2, **dadurch gekennzeichnet, dass** es sich bei einem der (Thio)phosphorsäuretriamide um N-n-Butylthiophosphorsäuretriamid handelt.

4. Zubereitung nach Anspruch 3, **dadurch gekennzeichnet, dass** sie außer N-n-Butylthiophosphorsäuretriamid noch mindestens ein Derivat, ausgewählt aus der Gruppe, bestehend aus N-Cyclohexyl-, N-Pentyl-, N-iso-Butyl- und N-Propylphophorsäuretriamid und -thiophosphorsäuretriamid, enthält.

5. Zubereitung nach Anspruch 4, **dadurch gekennzeichnet, dass** der Gehalt an N-n-Butylthiophosphorsäuretriamid von 40 bis 95 Gew.-% bezogen auf das Gesamtgewicht aller in der Zubereitung enthaltenen (Thio)phosphorsäuretriamide beträgt.

6. Verfahren zur Herstellung von Zubereitungen gemäß Anspruch 1, **dadurch gekennzeichnet, dass** man mindestens zwei (Thio)phosphorsäuretriamide miteinander vermischt
oder Thiophosphorylchlorid mit einem Gemisch von mindestens zwei verschiedenen primären und/oder sekundären Aminen und anschließend mit Ammoniak umsetzt.

7. Verwendung von Zubereitungen gemäß Anspruch 1 bei der Düngung mit harnstoffhaltigen Düngemitteln.

8. Harnstoffhaltiges Düngemittel, **dadurch gekennzeichnet, dass** es mindestens zwei unterschiedliche (Thio)phosphorsäuretriamide umfasst.

9. Harnstoffhaltiges Düngemittel, **dadurch gekennzeichnet, dass** es eine Zubereitung gemäß Anspruch 1 umfasst.

10. Harnstoffhaltiges Düngemittel nach Anspruch 8, **dadurch gekennzeichnet, dass** der Gesamtgehalt an (Thio)phosphorsäuretriamiden bezogen auf den enthaltenen Harnstoff zwischen 0.001 und 0.5 Gew.-% beträgt.

11. Verwendung harnstoffhaltiger Düngemittel gemäß Anspruch 8 in der Landwirtschaft oder im Gartenbau.
